# EUROPEAN PATENT APPLICATION

(11) **EP 2 439 499 A1**
(43) Date of publication of application: **11.04.2012**
(21) Application number: 11184258.9
(22) Date of filing: 07.10.2011
(51) Int. Cl.: G01F 1/68, F02M 35/10, G01N 27/00, G01N 33/00

(54) **Sensor structure**

(30) Priority: 07.10.2010 JP 2010227131
(71) Applicant: Hitachi Automotive Systems, Ltd., Hitachinaka-shi Ibaraki 312-8503 (JP)
(72) Inventor: Saito, Takayuki, Ibaraki, 312-0062 (JP); Kobayashi, Chihiro, Ibaraki, 312-8503 (JP)
(74) Representative: MERH-IP Matias Erny Reichl Hoffmann

(57) **Abstract**

Provided is a sensor structure capable of achieving both the resistance to pollution and the measurement performance such as humidity responsiveness. Also provided is a multifunction sensor capable of facilitating integration of detecting devices for various physical quantities. Specifically, the sensor structure includes: a housing 7 including a connector 5 that mediates an input/output exchange with an outside and a terminal 6 of the connector; and an electronic circuit board 9 that is mounted inside of the housing and includes a humidity sensing element 8, the terminal of the connector and the electronic circuit board being electrically connected to each other, the sensor structure being inserted to be attached to an airflow tube 1 through which a main air flows, via a seal material 11 provided in the housing. The housing includes a plurality of bypass channels 13 that each communicate an inside of the housing with an inside of the airflow tube. The plurality of bypass channels are each provided at an offset point with respect to a flow direction of the main air flowing through the airflow tube, and each have an opening near an inner wall surface of the airflow tube.

## Description

### BACKGROUND OF THE INVENTION

### Field of the Invention

The present invention relates to a sensor structure suitable for physical quantity measurement relating to intake air in an internal combustion engine, and an internal combustion engine control device that uses the sensor structure.

### Background Art

A heating resistor type mass air flow measurement device relating to a flow measuring technique, for example, is known as a physical quantity measuring technique relating to intake air for internal combustion engines. The heating resistor type mass air flow measurement device utilizes the correlation of the quantity of heat taken from a heating resistor with inflow discharge. The heating resistor type mass air flow measurement device is capable of directly measuring mass flow required to control combustion in an engine and is thus widely used as a flowmeter for air-fuel ratio control particularly in an automobile.

As another physical quantity measuring technique relating to intake air for internal combustion engines, for example, JP Patent Publication (Kokai) No. 2010-043883 A describes a sensor including a flow measurement device, a pressure detecting device, a humidity detecting device, and the like in an integrated manner, the sensor having a function of measuring a plurality of physical quantities.

Automobiles that use an electronically-controlled fuel injection system have been common and become more sophisticated in performance and function in recent years. In this case, an engine room is internally crammed with various sensors and control instruments. Furthermore, a wire harness that interconnects various sensors and control instruments as well as a control unit configured to control the sensors and control instruments, for example, is complicatedly intricate.

Accordingly, there has been a demand to reduce the number of components and improve the appearance of the interior of the engine room by integrating the plurality of sensors and control instruments together. For example, in a certain measure, the above-described flow measurement device is integrated with a temperature detecting device and even a semiconductor pressure detecting device, a humidity detecting device, and the like to allow connectors to be shared. This enables a reduction in the number of steps required to assemble components together into a vehicle and simplification of the wire harness.

In conventionally mainstream structures, the heating resistor type mass air flow measurement device is integrated with a temperature detecting device. However, as heating resistor type mass air flow measurement devices are integrated with the above-described pressure detecting device and humidity detecting device in the future, various technical problems are expected to occur.

In general, floating substances in the atmosphere are removed from intake air of an automobile by an air filter element included in an air cleaner box, and then the intake air is taken into the automobile. Unfortunately, for the purpose of avoiding a large pressure loss caused by the air filter element, which may lead to a reduction in engine output and fuel consumption rate, filter paper that is fine enough to catch minute carbon or other substances contained in exhaust gas is not used, and hence such minute floating substances in the atmosphere pass through the filter paper to be taken into an engine.

In addition, after the engine stops operating, engine oil exposed to a high temperature is evaporated to flow back toward the air cleaner box. In view of the above, air existing in or passing through an intake air flow tube located downstream of the air cleaner box is not always clean. In addition, electronic control of a diesel engine is increasingly advanced in recent years, and the diesel engine is more difficult as a sensor installation environment than a gasoline engine system.

The density of sensors placed under such an environment becomes higher as described above, and a demand for higher precision further increases hereafter. In order to achieve such higher precision, what is important is how to maintain a given precision for a long period of time, and the resistance to pollution needs to be considered. Up to now, an intake air flow sensor, an intake air thermometer, an intake air pressure gauge, and other such sensors are widely used as sensors for an intake system. Hereafter, measurement of an intake air humidity is much more likely to be used to control internal combustion engines, and moreover a humidity sensor is a sensor having a high sensitivity to pollution.

In order to improve the measurement precision and measurement responsiveness of the humidity sensor when an intake air humidity is measured, it is advisable to expose a humidity sensor part directly to an air flow. However, as disclosed in, for example, JP Patent Publication (Kokai) No. 2010-043883 A, if a main air flow in an airflow tube exists near an air inlet port and part of the main flow is introduced into the humidity sensor part, polluting substances floating in the air are highly likely to be taken in together. Accordingly, a first problem to be solved by the present invention is how to generate an air flow necessary for a humidity sensor part in a state where an air inlet port to the humidity sensor part is provided in a portion where an air flow does not exist.

A second problem to be solved by the present invention is how to prevent interference in performance and structure due to an integrated structure of various sensors. As disclosed in JP Patent Publication (Kokai) No. 2010-043883 A, for example, if a secondary air flow passage for an airflow sensor and a secondary air flow passage for a humidity sensor are connected to each other, a flow of air to be supplied to the airflow sensor is disturbed by air flow separation and joining, and a quantity of air to be supplied is fluctuated thereby. In terms of a structure, if a burr and the like occurring at the time of mold forming remain in a connection part between the secondary air flow passages, the quantity and disturbance of air do not become uniform, resulting in fluctuations in measurement precision of both the sensors.

A third problem to be solved by the present invention is how to improve simplicity in manufacture and ease in achievement of an integrated structure. As disclosed in JP Patent Publication (Kokai) No. 2010-043883 A, for example, if an air intake channel leading to the humidity sensor part is configured to be long, polluting substances are less likely to reach the humidity sensor part, but difficulty in manufacture concerning dimension stability and the like needs to be solved.

The present invention has been made in view of the above-mentioned problems, and therefore has an object to provide a sensor structure that is excellent in resistance to pollution, has high precision and high quality, and facilitates integration and manufacture.

### SUMMARY OF THE INVENTION

To deal with the above-mentioned problems, the following means is provided.

Provided is a sensor structure including: a housing including a connector that mediates an input/output exchange with an outside and a terminal of the connector; and/or an electronic circuit board that is mounted inside of the housing and includes a humidity sensing element, the terminal of the connector and the electronic circuit board being electrically connected to each other, the sensor structure being inserted to be attached to an airflow tube through which a main air flows, via a seal material provided in the housing, in which the housing includes a plurality of bypass channels that each communicate an inside of the housing with an inside of the airflow tube, and/or the plurality of bypass channels are each provided at an offset point with respect to a flow direction of the main air flowing through the airflow tube, and/or each have an opening near an inner wall surface of the airflow tube. With this configuration, a sensing element of a sensor is placed at a position as far as possible from an inlet port of intake air, whereby dirt in the air is less likely to reach the sensing element.

The present invention can provide a sensor structure capable of achieving both the protection performance against water and polluting substances and the measurement performance such as humidity responsiveness, and a sensor element having a high sensitivity to pollution environments can be used as a sensor for an intake system. Accordingly, measurement of an intake air humidity in a diesel engine system, which has conventionally been difficult, becomes possible. In addition, the present invention can provide a multifunction sensor that is excellent in performance and quality for automobile use, facilitates integration of detecting devices for various physical quantities, and enables a single sensor structure to detect and output signals at the same time.

### BRIEF DESCRIPTION OF THE DRAWINGS

FIG. 1A is a sensor structure view showing an embodiment of the present invention.
FIG. 1B is a sectional view taken along the line A-A in FIG. 1A.
FIG. 2 is a sensor structure view showing the embodiment of the present invention.
FIG. 3A is a sensor structure view showing the embodiment of the present invention.
FIG. 3B is a sectional view of FIG. 3A.
FIG. 4A is a sensor structure view showing the embodiment of the present invention.
FIG. 4B is a sectional view taken along the line B-B in FIG. 4A.
FIG. 5A is a sensor structure view showing another embodiment of the present invention.
FIG. 5B is a sectional view taken along the line C-C in FIG. 5A.
FIG. 6A is a sensor structure view showing still another embodiment of the present invention.
FIG. 6B is a sectional view taken along the line D-D in FIG. 6A.
FIG. 7A is a sensor structure view showing an embodiment, which is configured as a multifunction sensor.
FIG. 7B is a sectional view taken along the line E-E in FIG. 7A.
FIG. 8 is a sensor structure view showing another embodiment, which is configured as a multifunction sensor.
FIG. 9 is a view showing an embodiment in which the present invention is applied to an electronic fuel injection type internal combustion engine.

### DETAILED DESCRIPTION OF THE PREFERRED EMBODIMENTS

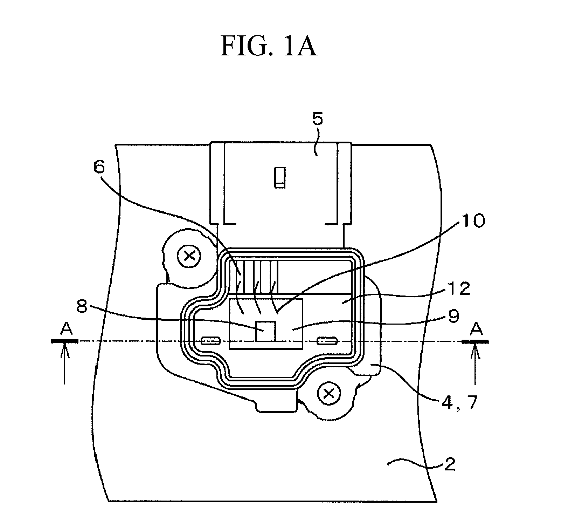

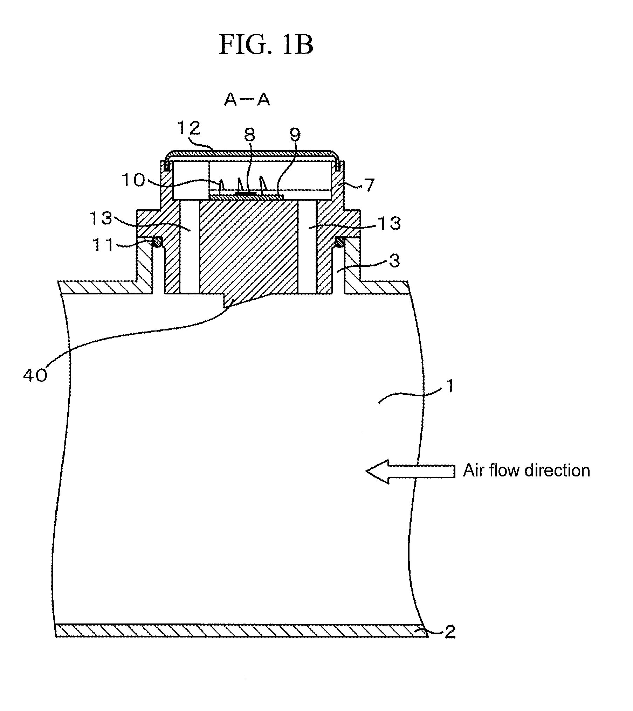

An embodiment of the present invention will be described with reference to FIGS. 1A and 1B. FIG. 1A is a sensor structure view showing the embodiment of the present invention, and FIG. 1B is a sectional view taken along the line A-A in FIG. 1A.

A sensor installation hole 3 is provided to part of a main air flow passage component (airflow tube) 2 constituting a main air flow passage 1, and a temperature/humidity detecting device 4 is attached to the sensor installation hole 3 via a seal material 11.

In the temperature/humidity detecting device 4, a housing 7 including a connector 5 and connector terminals 6 in an integrated manner serves as a foundation, an electronic circuit board 9 for temperature and humidity detection on which a temperature/humidity sensing element 8 is mounted is placed on the foundation, and the structure is closed with a cover 12.

The connector terminals 6 are each electrically connected to the electronic circuit board 9 for temperature and humidity detection by a bonding wire 10, and the connector 5 mediates an input/output exchange with the outside.

In the housing 7, a bypass channel 13 that communicates an internal space of the housing 7 with the main air flow passage 1 is provided at each of two offset points, that is, one point on the upstream side and one point on the downstream side in an air flow direction. The reason why the bypass channels 13 are thus provided is that part of air flowing through the main air flow passage 1 is taken into the housing 7 via one of the bypass channels 13 by utilizing a difference in pressure between the upstream and downstream sides that is caused by airflow tube friction of the air flowing through the main air flow passage 1, to thereby generate an air flow around the temperature/humidity sensing element 8.

If an air flow is generated around the temperature/humidity sensing element 8, the temperature and humidity detection responsiveness and measurement precision can be improved. Note that, as the difference in pressure between the bypass channels 13 provided at two points is larger, the quantity of air flowing around the temperature/humidity sensing element 8 increases, and such a larger quantity of air is more advantageous to the measurement. For example, the difference in pressure can be made larger by protruding part of the structure connected to the housing 7 to the inside of the main air flow passage 1 or providing a pressure adjustment projection 40 between the two bypass channels 13.

In addition, polluting substances floating in the air, water droplets, and the like are carried by a high-rate main air flow flowing through the main air flow passage 1. Accordingly, in the present embodiment, the bypass channels 13 are opened near an inner wall surface of the main air flow passage 1 near which the flow rate is indefinitely close to zero. As a result, the polluting substances floating in the air, water droplets, and the like continue to linearly advance through the main air flow passage 1 due to an inertial effect, and the polluting substances floating in the air, water droplets, and the like do not flow into the bypass channel 13 in which an air flow is generated by the difference in pressure. This configuration makes it possible to allow air to flow in but prevent the polluting substances from being taken in, that is, both the resistance to pollution and the measurement performance can be achieved.

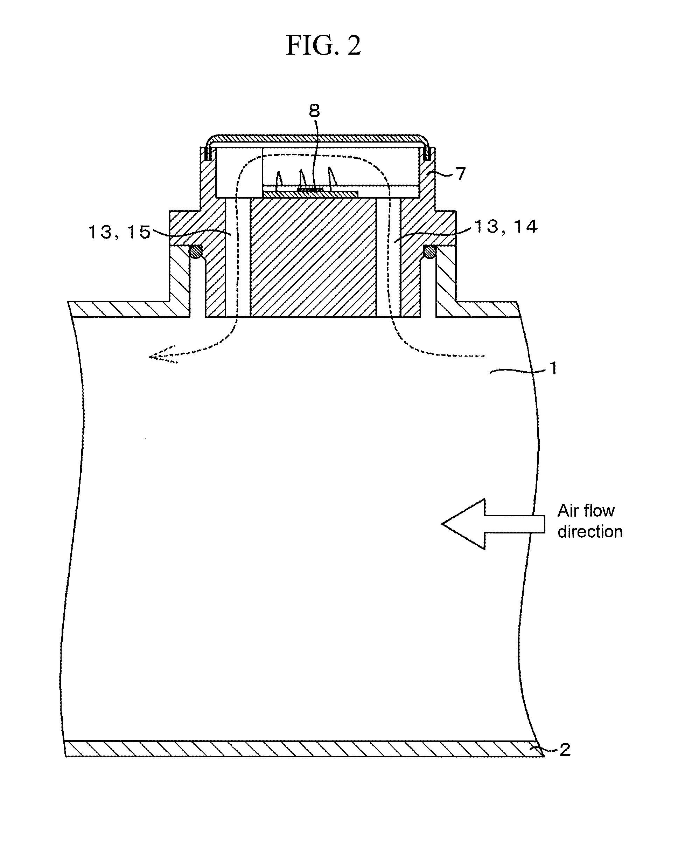

FIG. 2 is a sectional view of the temperature/humidity detecting device 4.

Air is caused to flow into the internal space of the housing 7, that is, around the temperature/humidity sensing element 8 via one of the bypass channels 13 by utilizing the difference in pressure between the upstream and downstream sides that is caused by the airflow tube friction of the air flowing through the main air flow passage 1. For this purpose, in the housing 7, the bypass channel 13 that communicates the internal space of the housing 7 with the main air flow passage 1 is provided at each of two offset points, that is, one point on the upstream side and one point on the downstream side in the air flow direction. In this configuration, the bypass channel 13 provided on the upstream side in the air flow direction serves as an air intake channel 14 that takes in air for temperature and humidity measurement, and the bypass channel 13 provided on the downstream side in the air flow direction serves as an air exhaust channel 15 that exhausts the air after the temperature and humidity measurement from the inside of the housing 7.

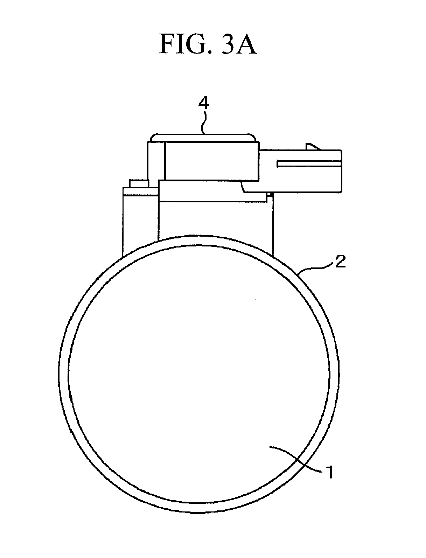

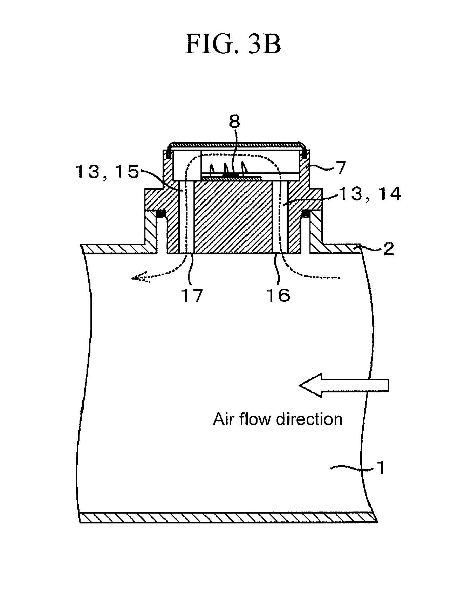

FIG. 3A is a front view of the temperature/humidity detecting device 4, and FIG. 3B is a sectional view around the bypass channels 13.

In order to cause air to flow around the temperature/humidity sensing element 8, the air intake channel 14 and the air exhaust channel 15 are provided in the housing 7, and an inlet 16 of the air intake channel and an outlet 17 of the air exhaust channel are each opened at a position as high as the inner wall surface of the main air flow passage 1. The air intake channel 14 and the air exhaust channel 15 each extend to the outside with respect to an outer wall surface of the main air flow passage component (airflow tube) 2 to be communicated with the inside of the housing 7, and this therefore defines a structural feature that the air for temperature and humidity detection flows so as to be bypassed on the outer side of the outer wall surface of the main air flow passage component (airflow tube) 2. This configuration makes it possible to secure a long distance between the inlet 16 of the air intake channel and the temperature/humidity sensing element 8, and hence the resistance to pollution is improved.

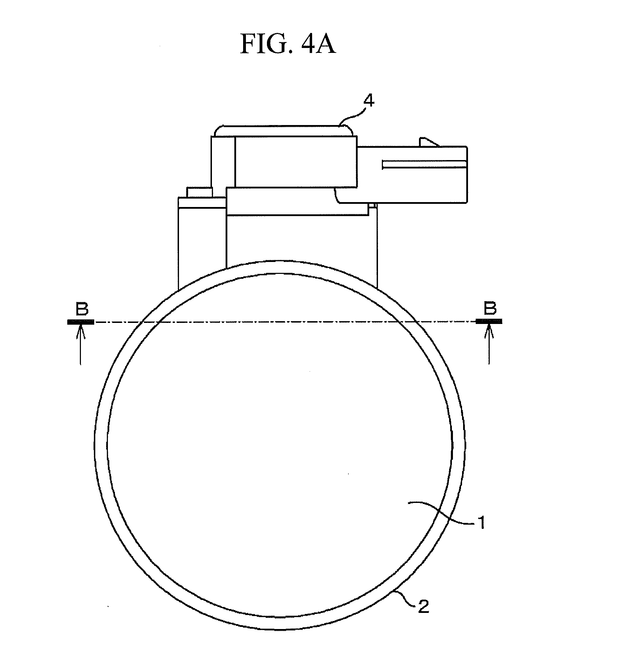

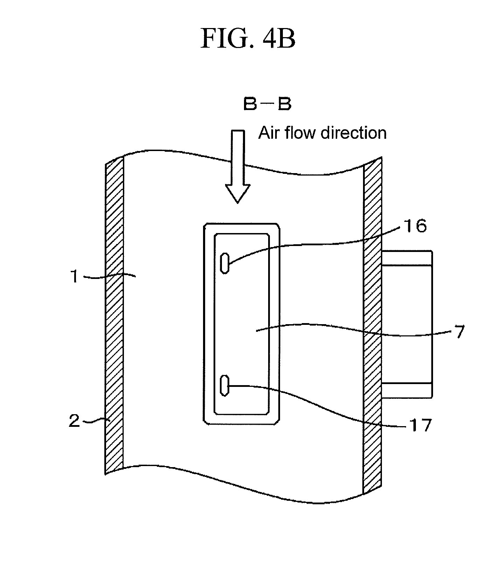

FIG. 4A is a front view of the temperature/humidity detecting device 4, and FIG. 4B is a sectional view taken along the line B-B in FIG. 4A.

The inlet 16 of the air intake channel and the outlet 17 of the air exhaust channel are each opened in a direction perpendicular to the air flow direction in the main air flow passage 1. This configuration enables an inertial effect to act to the maximum on polluting substances floating in the air flowing through the main air flow passage 1, water droplets scattered together with the air, and the like, whereby the polluting substances and the water droplets are less likely to be taken into the housing 7. With such a configuration as described above, both the resistance to pollution and the measurement performance can be achieved.

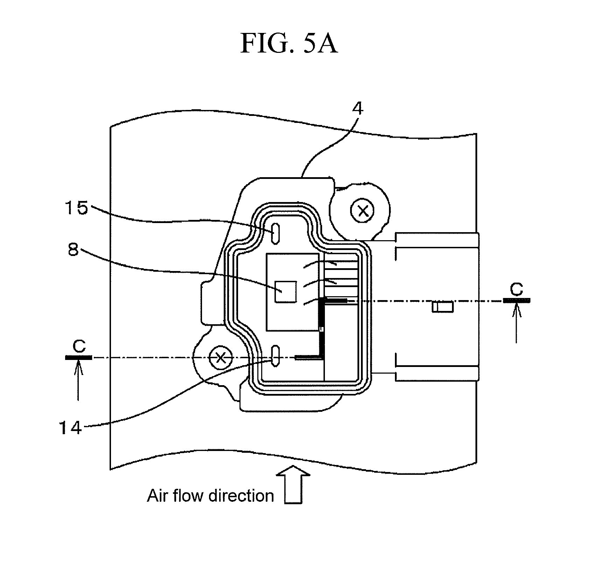

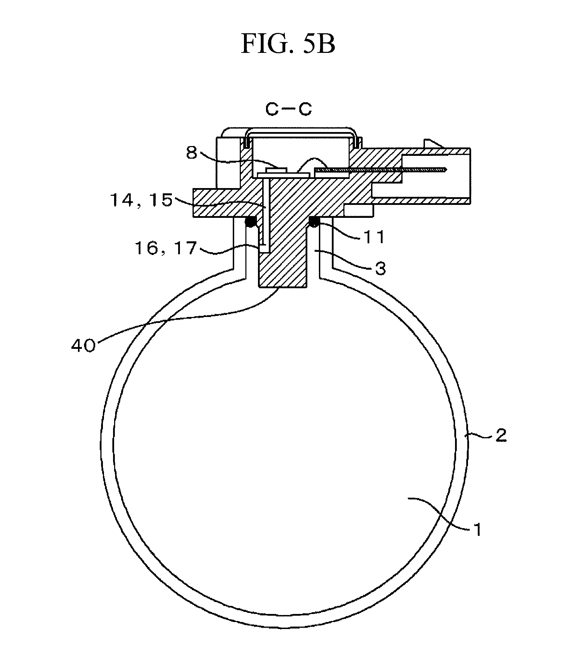

Next, another embodiment for improving the resistance to pollution will be described with reference to FIGS. 5A and 5B. FIG. 5A is a top view of the temperature/humidity detecting device 4 according to the present embodiment, and FIG. 5B is a sectional view taken along the line C-C in FIG. 5A.

The sensor installation hole 3 is provided to part of the main air flow passage component (airflow tube) 2 constituting the main air flow passage 1, and the temperature/humidity detecting device 4 is attached to the sensor installation hole 3 via the seal material 11. In the present embodiment, for the purpose of a further improvement in resistance to pollution of the temperature/humidity detecting device 4, the inlet 16 of the air intake channel and the outlet 17 of the air exhaust channel are each provided so as to be opened between the seal material 11 and the inner wall surface of the main air flow passage 1. With this configuration, the inlet 16 of the air intake channel and the outlet 17 of the air exhaust channel can be opened in a region where an air flow does not exist, and hence polluting substances floating in the air flowing through the main air flow passage 1, water droplets scattered together with the air, and the like are further less likely to be taken in, so that a pollution problem of the temperature/humidity sensing element 8 caused by the polluting substances, the water droplets, and the like is solved. In addition, in the case where this configuration is adopted, for example, part of the structure connected to the housing 7 is protruded to the inside of the main air flow passage 1, and the protruded portion is caused to function as the pressure adjustment projection 40, whereby the difference in pressure between the inlet 16 of the air intake channel and the outlet 17 of the air exhaust channel can be made larger by the action of a flow around the structure. This configuration can improve the measurement performance such as responsiveness as well.

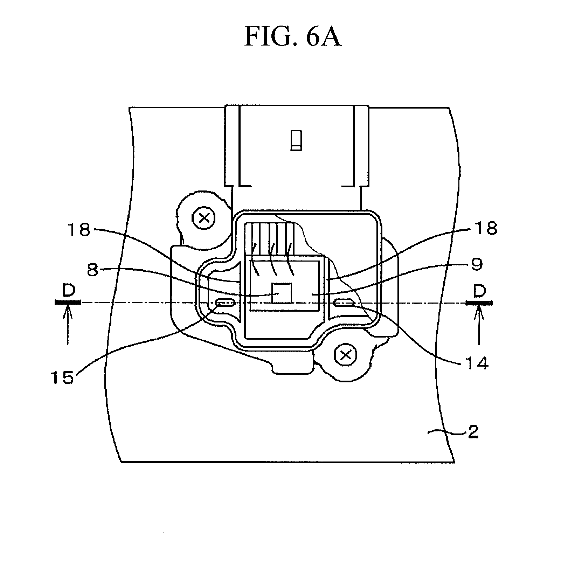

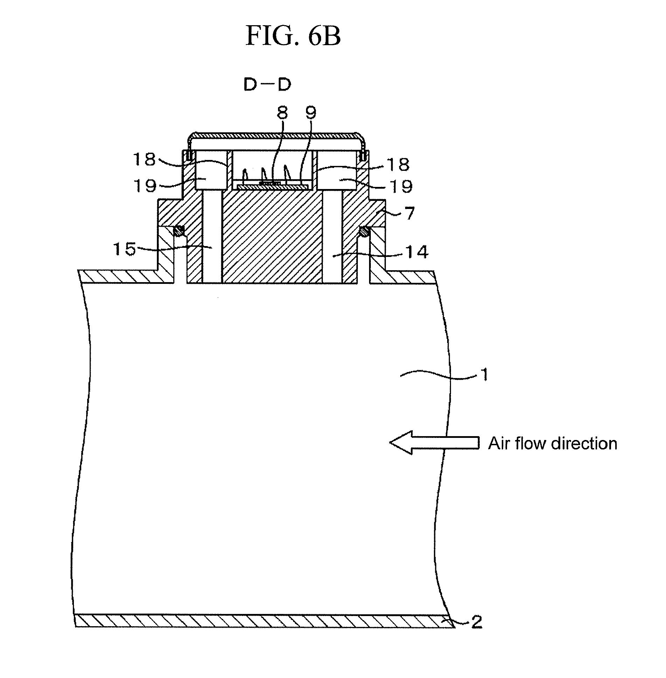

Next, still another embodiment for improving the resistance to pollution will be described with reference to FIGS. 6A and 6B. FIG. 6A is a top view of the temperature/humidity detecting device 4 according to the present embodiment, and FIG. 6B is a sectional view taken along the line D-D in FIG. 6A.

In the present embodiment, dividing walls 18 are provided in the housing 7, whereby the air intake channel 14 and the air exhaust channel 15 are each configured as an expanded flow channel 19 inside of the housing 7. Particularly in the case where the air that is taken from the main air flow passage 1 via the air intake channel 14 contains minute polluting substances such as soot, the air flow is disturbed by the action of the expanded flow channel immediately after entering the housing 7, and the polluting substances are diffused in the expanded flow channel, so that the minute polluting substances can be attached to a resin wall surface constituting the housing 7. In addition, even if water or a large number of polluting substances enter the housing 7, the dividing wall 18 thus provided functions as a dam so as to prevent the water or polluting substances from flowing into the temperature/humidity sensing element 8 and the electronic circuit board 9 for temperature and humidity detection. This configuration can achieve the temperature/humidity detecting device 4 further excellent in resistance to pollution and measurement performance.

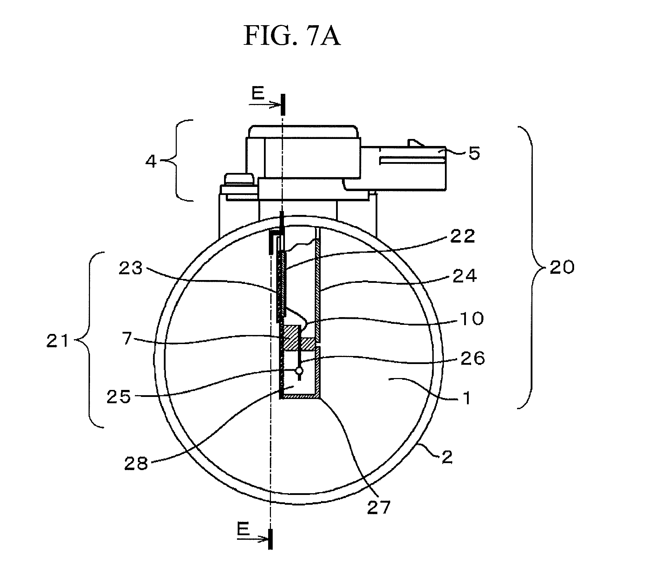

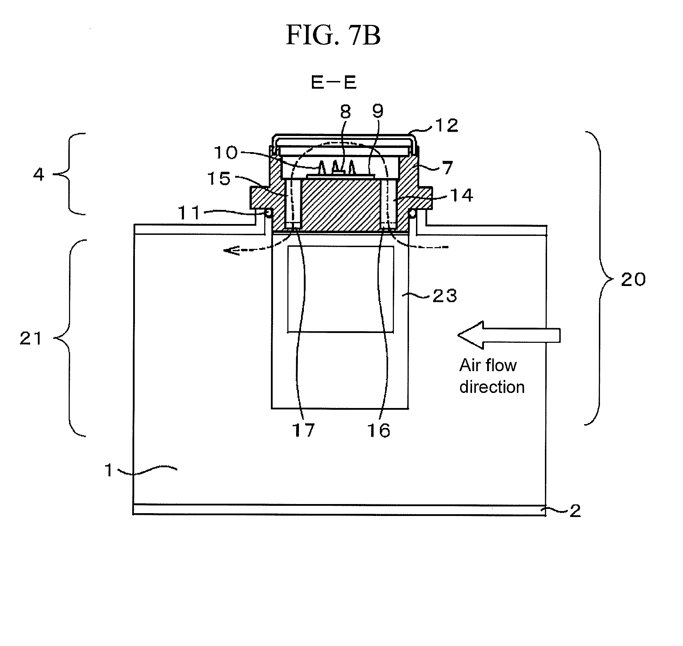

Next, an embodiment of a multifunction sensor 20 including the temperature/humidity detecting device 4 according to the present invention and an airflow sensor in an integrated manner will be described with reference to FIGS. 7A and 7B. FIG. 7A is a sensor structure view of the multifunction sensor 20, and FIG. 7B is a sectional view taken along the line E-E in FIG. 7A.

In the multifunction sensor 20, the housing 7 including the connector 5 and the connector terminals 6 in an integrated manner serves as a foundation, the electronic circuit board 9 for temperature and humidity detection on which the temperature/humidity sensing element 8 is mounted is placed on the foundation, and the structure is closed with the cover 12. The connector terminals 6 are each electrically connected to the electronic circuit board 9 for temperature and humidity detection by the bonding wire 10, and the connector 5 mediates an input/output exchange with the outside.

In the housing 7, the air intake channel 14 and the air exhaust channel 15 that each communicate the internal space of the housing 7 with the main air flow passage 1 are respectively provided at one offset point on the upstream side and one offset point on the downstream side in the air flow direction. In addition, the inlet 16 of the air intake channel and the outlet 17 of the air exhaust channel respectively corresponding to an entrance of the air intake channel 14 and an exit of the air exhaust channel 15 are each provided so as to be opened between the seal material 11 and the inner wall surface of the main air flow passage 1, whereby polluting substances floating in the air flowing through the main air flow passage 1, water droplets scattered together with the air, and the like are less likely to be taken in.

An airflow sensor 21 is integrally provided at a leading end part on the main air flow passage 1 side of these components that realize the humidity detecting function. The housing 7 serving as the structural foundation is extended toward the inside of the main air flow passage 1, and a region of circuit casing for the airflow sensor is defined by: a base plate 23 that holds an electronic circuit board 22 for the airflow sensor; and an airflow sensor cover 24. In addition, a terminal 26 of an airflow sensing element that holds an airflow sensing element 25 is provided integrally with the housing 7, and the airflow sensing element 25 is mounted inside of a secondary air flow passage 28 for the airflow sensor constituted by a secondary air flow passage component 27. The airflow sensing element 25 is electrically connected to the electronic circuit board 22 for the airflow sensor by the bonding wire 10, and similarly, the connector terminals 6 are each electrically connected to the electronic circuit board 22 for the airflow sensor by the bonding wire 10. The connector 5 mediates input/output exchanges of a temperature/humidity signal and an air flow signal with the outside. With this configuration, the structure of the airflow sensor 21 and the structure of the temperature/humidity detecting device 4 do not interfere with each other, and a sensor can be easily provided with multiple functions. Further, with this configuration, the airflow sensor 21 itself functions as the pressure adjustment projection 40, and hence the difference in pressure between the inlet 16 of the air intake channel and the outlet 17 of the air exhaust channel can be made larger by the action of a flow around the structure, thus enabling a structure advantageous to air supply to the temperature/humidity sensing element 8. This configuration can improve both the responsiveness and the measurement performance.

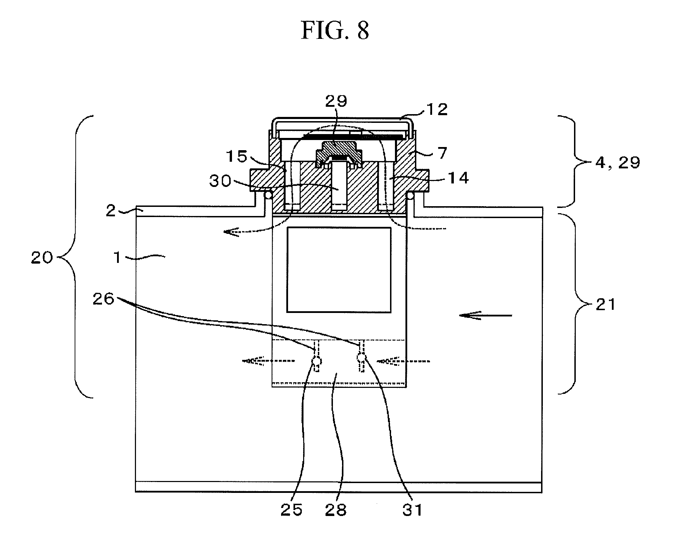

Next, an embodiment of a multifunction sensor including the temperature/humidity detecting device 4 according to the present invention, an airflow sensor, and a pressure detecting device in an integrated manner will be described with reference to FIG. 8.

A pressure detecting device 29 is integrally provided in a humidity detecting region defined by the housing 7 and the cover 12. Further, the housing 7 is provided with not only the air intake channel 14 and the air exhaust channel 15 that each communicate the internal space of the housing 7 with the main air flow passage 1 but also a pressure intake hole 30 located between the air intake channel 14 and the air exhaust channel 15. Still further, the airflow sensor 21 is integrally provided at a leading end part on the main air flow passage 1 side of these components that realize the humidity detecting function and the pressure detecting function. The terminal 26 of the airflow sensing element that holds the airflow sensing element 25 and a temperature compensation resistor 31 is provided integrally with the housing 7, and the airflow sensing element 25 and the temperature compensation resistor 31 are mounted inside of the secondary air flow passage 28 for the airflow sensor. That is, a flow channel for temperature and humidity detection constituted by the air intake channel 14 and the air exhaust channel 15, the secondary air flow passage 28 for the airflow sensor, and even the pressure intake hole 30 are independently placed so as not to structurally interfere with one another. With this configuration, the structure of the airflow sensor 21, the structure of the temperature/humidity detecting device 4, and even the structure of the pressure detecting device 29 do not interfere with one another, and it is possible to provide the multifunction sensor 20 capable of flexibly dealing with a request to add/delete a function to/from the sensor, that is, even capable of controlling whether to provide each function to the sensor.

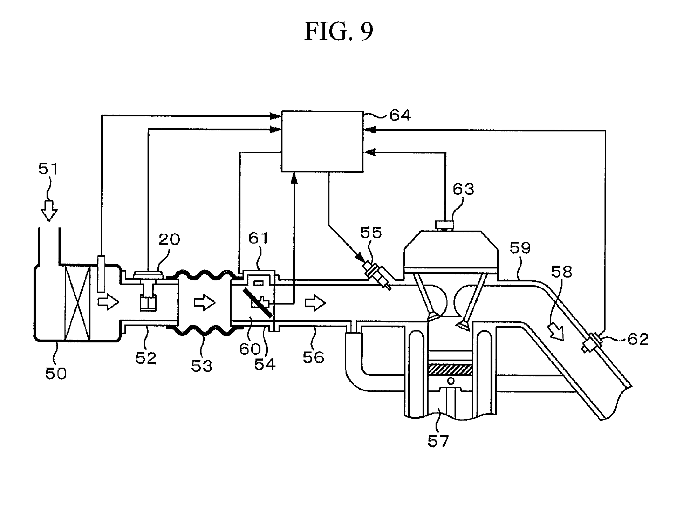

Lastly, an embodiment in which the multifunction sensor 20 of the present invention is applied to an electronic fuel injection type internal combustion engine will be described with reference to FIG. 9.

An intake air 51 taken from an air cleaner 50 is introduced into an engine cylinder 57 through an intake manifold 56. The intake manifold 56 includes: the main air flow passage component (airflow tube) 2 into which the multifunction sensor 20 is inserted; an intake air duct 53; a throttle body 54; and a fuel injector 55 supplied with fuel. On the other hand, an exhaust gas 58 generated in the engine cylinder 57 is exhausted through an exhaust manifold 59.

An engine control unit 64 receives: an air flow signal, a humidity signal, a pressure signal, and a temperature signal outputted from the multifunction sensor 20; a throttle valve angle signal outputted from a throttle angle sensor 60; an oxygen concentration signal outputted from an oxygen meter 62 provided to the exhaust manifold 59; an engine speed signal outputted from an engine speed meter 63; and other such signals. The engine control unit 64 sequentially calculates these signals to obtain an optimum amount of fuel injection and an optimum output torque. The engine control unit 64 uses these values to control the fuel injector 55 and the throttle valve 61.

### DESCRIPTION OF SYMBOLS

- 1: Main air flow passage
- 2: Main air flow passage component (Airflow tube)
- 3: Sensor installation hole
- 4: Temperature/humidity detecting device
- 5: Connector
- 6: Connector terminals
- 7: Housing
- 8: Temperature/humidity sensing element
- 9: Electronic circuit board for temperature and humidity detection
- 10: Bonding wire
- 11: Seal material
- 12: Cover
- 13: Bypass channel
- 14: Air intake channel
- 15: Air exhaust channel
- 16: Inlet of air intake channel
- 17: Outlet of air exhaust channel
- 18: Dividing wall
- 19: Expanded flow channel
- 20: Multifunction sensor
- 21: Airflow sensor
- 22: Electronic circuit board for airflow sensor
- 23: Base plate
- 24: Airflow sensor cover
- 25: Airflow sensing element
- 26: Terminal of airflow sensing element
- 27: Secondary air flow passage component
- 28: Secondary air flow passage for airflow sensor
- 29: Pressure detecting device
- 30: Pressure intake hole
- 31: Temperature compensation resistor
- 40: Pressure adjustment projection
- 50: Air cleaner
- 51: Intake air
- 52: Body (Flow tube)
- 53: Intake air duct
- 54: Throttle body
- 55: Fuel injector
- 56: Intake manifold
- 57: Engine cylinder
- 58: Exhaust gas
- 59: Exhaust manifold
- 60: Throttle angle sensor
- 61: Throttle valve
- 62: Oxygen meter
- 63: Engine speed meter
- 64: Engine control unit

## Claims

1. A sensor structure comprising:
a housing (7) including a connector (5) that mediates an input/output exchange with an outside and a terminal (6) of the connector (5); and
an electronic circuit board (9) that is mounted inside of the housing (7) and includes a humidity sensing element (8),
the terminal (6) of the connector (5) and the electronic circuit board (9) being electrically connected to each other,
the sensor structure being inserted to be attached to an airflow tube (2) through which a main air flows, via a seal material (11) provided in the housing (7), wherein
the housing (7) includes a plurality of bypass channels (13) that each communicate an inside of the housing (7) with an inside of the airflow tube (2), and
the plurality of bypass channels (13) are each provided at an offset point with respect to a flow direction of the main air flowing through the airflow tube (2), and each have an opening near an inner wall surface of the airflow tube (2).

2. The sensor structure according to Claim 1, further comprising a projection-like structure between the plurality of bypass channels (13).

3. The sensor structure according to Claim 1 or 2, wherein
at least one of the plurality of bypass channels (13) serves as an air intake channel (14) that takes air into the housing (7), for humidity measurement,
at least one of the plurality of other bypass channels (13) serves as an air exhaust channel (15) that exhausts the taken-in air to the inside of the airflow tube (2),
the humidity sensing element (8) is provided at a position inside of the housing (7) through which the taken-in air passes, and
the taken-in air is exhausted after passing through the humidity sensing element (8).

4. The sensor structure according to Claim 3, wherein a route from the air intake channel (14) to the air exhaust channel (15) runs on an outer side of an outer wall surface of the airflow tube (2).

5. The sensor structure according to at least one of Claims 1 to 4, wherein the opening is formed in a direction perpendicular to the flow direction of the main air.

6. The sensor structure according to at least one of Claims 1 to 5, wherein
part of the housing (7) is formed so as to protrude to the inside of the airflow tube (2),
and
the opening is formed between the inner wall surface of the airflow tube (2) and the seal material (11).

7. The sensor structure according to at least one of Claims 1 to 6, wherein a channel sectional area of each of the plurality of bypass channels (13) is increased near a position at which the humidity sensing element (8) is provided.

8. The sensor structure according to at least one of Claims 1 to 7, further comprising, on a lower side of the humidity sensing element (8) of the housing (7) in an insertion direction into the airflow tube (2):
an airflow sensing element (25) that senses a quantity of air flowing inside of the airflow tube (2); and
an electronic circuit board (22) for an airflow sensor, the electronic circuit board (22) being electrically connected to the airflow sensing element (25), wherein
an air flow signal and a humidity signal respectively obtained from the airflow sensing element (25) and the humidity sensing element (8) can be exchanged with the outside via the connector (5).

9. The sensor structure according to Claim 8, wherein
the airflow sensing element (25) is provided inside of a secondary air flow passage (28) that takes in part of the main air, and
a route of an air flow for airflow detection inside of the secondary air flow passage (28) and a route of an air flow for humidity detection inside of the plurality of bypass channels (13) run independently of each other.

10. A fuel injection system for an internal combustion engine, comprising the sensor structure according to any of Claims 1 to 9.
